# EUROPÄISCHE PATENTSCHRIFT

(11) **EP 2 616 410 B1**
(45) Veröffentlichungstag und Bekanntmachung des Hinweises auf die Patenterteilung: **28.10.2015**
(21) Anmeldenummer: 11754819.8
(22) Anmeldetag: 06.09.2011
(51) Int. Cl.: C04B 28/02

(54) **BAUSTOFF AUS KIESSCHLAMM**
BUILDING MATERIAL MADE OF GRAVEL SLUDGE
MATÉRIAU À BASE DE BOUE DE GRAVIER

(30) Priorität: 16.09.2010 CH 14942010
(43) Veröffentlichungstag der Anmeldung: 24.07.2013
(73) Patentinhaber: Brandis Finanz Holding AG, 7304 Maienfeld (CH)
(72) Erfinder: BUNGE, Rainer, CH-8849 Alpthal (CH); ZINDEL, Bernhard, CH-7304 Maienfeld (CH)
(74) Vertreter: Hasler, Erich
(86) Internationale Anmeldenummer: PCT/CH2011/000205
(87) Internationale Veröffentlichungsnummer: WO 2012/034241

(56) Entgegenhaltungen:
- EP-A1- 2 154 117
- M.ABDULLAHI: "Characteristics of Wood ASH/OPC Concrete", LEONARDO ELECTRONIC JOURNAL OF PRACTICES AND TECHNOLOGIES, Nr. 8, 2006, Seiten 9-16, XP002612392,
- FELIX F UDOEYO ET AL: "Potential of Wood Waste Ash as an Additive in Concrete", JOURNAL OF MATERIALS IN CIVIL ENGINEERING, Bd. 18, Nr. 4, 1. Juli 2006 (2006-07-01), Seiten 605-611, XP008129070, ISION, US ISSN: 0899-1561
- T.R.NAIK,R.SIDDIQUE,R.N.KRAUS: "Properties of Flowable Slurry containing Wood Ash (Report No.CBU-2002-14, REP-467)", , Juni 2002 (2002-06), Seiten FP,1-25, XP002612393, Center for By-Products Utilization Gefunden im Internet: URL:http://www4.uwm.edu/cbu/Papers/2002%20 CBU%20Reports/CBU-2002-14.pdf [gefunden am 2011-01-10]

## Beschreibung

### Technisches Gebiet

Die Erfindung fällt in das Gebiet der bindemittelgebundenen Baustoffe. Das erfindungsgemässe Verfahren dient zur Herstellung von Baustoff aus Kiesschlamm.

### Stand der Technik

Kiesschlamm ist ein Abfallprodukt aus der Kieswäsche. Beim Waschprozess wird das Rohmaterial, also der Wandkies, typischerweise bei 63 µm klassiert. Die gröberen Fraktionen werden als Baustoffe verwendet und das Feinkorn bildet den Kiesschlamm. Dieser ist ein Abfallprodukt und wird in der Regel zunächst entwässert und dann deponiert. Kiesschlamm besteht weitestgehend aus mineralischen Bestandteilen und enthält nach der Entwässerung, je nach Verfahren, zwischen 15% und 40% Wasser. In typischen Kieswerken fallen je Tonne Kiessand zwischen 100 kg und 300 kg Kiesschlamm an (gerechnet auf Trockensubstanz). Allein in der Schweiz beträgt die Menge an Kiesschlamm, der deponiert werden muss, rund 5 Mio. t/a.

Es hat in der Vergangenheit nicht an Versuchen gefehlt, den entwässerten Kiesschlamm als Baustoff zu verwerten. Hierbei wurden insbesondere thermische Verfahren untersucht, um blähtonähnliche Materialien herzustellen. Auch die Vermischung mit gebranntem Kalk ist bekannt. Hierbei wandelt sich der entwässerte Kiesschlamm von einer klebrig/plastischen Konsistenz in eine Krümelstruktur um, sodass das Material mittels geeigneten Maschinen verdichtet werden kann. Nachteilig ist hierbei, dass sich, zumindest während der ersten Wochen, keine Festigkeit des Bauwerkes ausbildet. Falls diese jedoch gewünscht ist, z.B. im Strassenbau, wird ausser gebranntem Kalk auch Zement in den Kiesschlamm eingemischt. Allerdings sind diese Verfahren in der Regel nicht wirtschaftlich durchführbar, da sowohl gebrannter Kalk als auch Zement teuer sind.

Zur partiellen Substitution von Zement in zementgebundenen Baustoffen haben sich Aschen aus ausgewählten Verbrennungsprozessen bewährt. Vor allem kommen Flugaschen aus der Kohleverbrennung in diesen "Flugaschenzementen" zum Einsatz. Hierbei kann ein Teil des teuren Zements durch Zugabe der billigeren Flugasche substituiert werden, ohne dass der mit diesem Bindemittel hergestellte Beton an Endfestigkeit einbüsst.

Im Gegensatz zu den Kohleaschen sind Holzaschen, insbesondere wegen ihres hohen Gehalts an Alkalimetallen, zur Herstellung von Beton nur schlecht geeignet. Die Entsorgung von Holzasche ist aber ein Problem, welches sich mit der zunehmenden Verbreitung von Biomassekraftwerken in den Industrienationen deutlich verschärft.

Der Vollständigkeit halber sei erwähnt, dass in der Vergangenheit Versuche unternommen wurden, Holzaschen z.T. auch in Kombination mit Sand in zementgebundenen Baustoffen einzusetzen. Beispielhaft seien genannt: Die europäische Offenlegungsschrift EP 2 154 117 A1 sowie die Schriften: M.Abdullahi: "Characteristics of Wood ASH/OPC Concrete"; Leonardo Electronic Journal of Practices and Technologies, Nr.8, 2006, Seiten 9-16 und F.F. Udoeyo et al.: "Potential of Wood Waste Ash as an Additive in Concrete"; Journal of Materials in Civil Engineering, Bd. 18, Nr.4, 1.Juli 2006, Seiten 605-611. Keines der Dokumente beschreibt jedoch die Verwendung von Kiesschlamm.
Die EP 2 154 117 A1 handelt von Baustoffen, die beliebige Pflanzenteile enthalten und zusätzlich einen Mineralisator. Als Mineralisator kommen alle puzzolanischen Stoffe in Frage.
Abdullahi beschäftigt sich mit Gemischen aus Kies bzw. Sand, Zement und Holzasche. Unter Verwendung von Norm-Kiessand wurde gefunden, dass bei einem Beton die optimale Substitution von Zement durch Holzasche bei 20% liegt. Auch die von Udoeyo *et al.* verfasste Schrift bezieht sich auf Sand als Zuschlagstoff (nicht Kiesschlamm). Der verwendete Sand enthält praktisch keine Bestandteile kleiner als 0.15mm.

### Aufgabe der Erfindung

Der Erfindung liegt die Aufgabe zugrunde, ein Verfahren zu schaffen, welches es erlaubt, aus entwässertem Kiesschlamm einen bindemittelgebundenen Baustoff herzustellen, der einerseits eine für Erdbauwerke ausreichende Festigkeit aufweist, andererseits aber nur geringe Mengen an Zement enthält.

### Darstellung der Erfindung

Die oben genannte Aufgabe wird gelöst durch ein aushärtbares Gemisch nach Anspruch 1 und ein Verfahren zu dessen Herstellung nach Anspruch 9.

Offenbart sei unter anderem ein aushärtbares Gemisch (z.B. eine Stampfmasse) welches partiell entwässerten Kiesschlamm, ein hydraulisches Bindemittel und Asche von Biomasse beinhaltet. Hergestellt wird es, indem einem partiell entwässerten Kiesschlamm ein hydraulisches Bindemittel und Asche von Biomasse zugegeben werden. Der partiell entwässerte Kiesschlamm weist zweckmässigerweise einen Wassergehalt von 15 bis 50% auf, wobei 20 bis 40% und insbesondere 25 bis 35% besonders bevorzugt sind.

Wie im einführenden Teil erwähnt, wurden in der Vergangenheit zementgebundene Baustoffe mit Holzaschen und z.T. auch Sand hergestellt. Kiesschlamm unterscheidet sich jedoch aufgrund seiner Herkunft in Bezug auf die Zusammensetzung (Gehalt an Tonmineralien etc.), die mittlere Korngrösse und andere Parameter wesentlich von normalem Kiessand, wie er für zementgebundene Baustoffe seit jeher eingesetzt wird.

Nachfolgend werden Ausgestaltungsformen und Eigenschaften des erfindungsgemässen Gemischs beschrieben, wobei die genannten bevorzugten Merkmale - soweit sie sich nicht ausschliessen - in beliebiger Kombination verwirklicht sein können. Das erfindungsgemässe Verfahren kann darüber hinaus als Verfahrensschritte die Verwendung einer oder mehrerer der genannten bevorzugten Merkmale des erfindungsgemässen Gemischs umfassen. Beispielsweise werden dem partiell entwässerten Kiesschlamm das hydraulische Bindemittel und die Asche bevorzugt in den Mengen zugegeben, wie sie im Zusammenhang mit dem erfindungsgemässen Gemisch erwähnt sind.

Ausserdem umfasst die Erfindung auch ein Bauwerk, Bauteil oder Element, welches aus einem Gemisch wie es in diesem Dokument beschrieben ist, hergestellt ist, bzw. ein genanntes Bauwerk, Bauteil oder Element aus einem solchen Gemisch, welches ausgehärtet ist.

Der mit dem erfindungsgemässen Verfahren verfestigte Kiesschlamm kann beispielsweise in folgenden Arten von Bauwerken eingesetzt werden:
- Bau von Fundationsschichten
- Dammbau
- Hinterfüllungen
- Verfüllung von Rohrgräben

Der Anteil der Kiesschlamm-Trockensubstanz am Gemisch beträgt mit Vorteil mindestens 40 Gew.-%, vorzugsweise mindestens 46 Gew.-% und besonders bevorzugt mindestens 53 Gew.-%. Unter der Kiesschlamm-Trockensubstanz ist der Feststoffanteil des Kiesschlamms (d.h. nach Abzug der Wassermenge) zu verstehen.

Wie erwähnt, handelt es sich bei der Asche um Asche aus Biomasse, insbesondere solche aus Biomassekraftwerken. Bei der Biomasse handelt es sich vorzugsweise um einen nachwachsenden Rohstoff, also nicht um fossile Energieträger wie Kohle. Das ursprüngliche biologische Material hat also mit Vorteil in den letzten 50'000, vorzugsweise 500 und insbesondere 50 oder 5 Jahren noch eine Stoffwechselaktivität aufgewiesen.

Vorzugsweise handelt es sich bei der Asche um Asche aus pflanzlicher Biomasse, wobei Holzasche besonders bevorzugt ist. Weiterhin ist es vorteilhaft wenn es sich bei der Asche um Flugasche handelt (bevorzugte Korngrösse: vgl. weiter unten).

Überraschenderweise können auch Aschen eingesetzt werden, deren Siliziumgehalt gering ist und die daher nach herrschender Lehrmeinung nicht als Puzzolanzusatz im Betonbau geeignet sind. Nach einer bevorzugten Ausgestaltungsvariante der vorliegenden Erfindung enthält die Asche deshalb weniger als 15 Gew.-% Silizium, wobei weniger als 10 Gew.-% oder weniger als 6 Gew.-% besonders bevorzugt sind. Es ist vorteilhaft, wenn zumindest der Feinanteil der Asche, d.h. derjenige Anteil mit einer Korngrösse von weniger als 0,3 mm, einen genannten Siliziumgehalt aufweist.

Bei der Asche handelt es sich mit Vorteil um Asche aus Verbrennungsanlagen, die überwiegend mit der genannten Biomasse (vorzugsweise Holz) befeuert werden, insbesondere um Kesselaschen, Zyklonaschen und Filteraschen. Auch in diesem Zusammenhang sind die feinkörnigen Aschenanteile mit einer Korngrösse von weniger als 0,3 mm besonders bevorzugt.

Als hydraulisches Bindemittel dient mit Vorzug Zement, wobei Portlandzemente und Tonerdezemente besonders bevorzugt sind.

Nach einer bevorzugten Ausgestaltungsvariante beträgt das Verhältnis der Menge an hydraulischem Bindemittel zur Menge an Asche zwischen 15:85 und 85:15, vorzugsweise zwischen 20:80 und 70:30 und insbesondere zwischen 30:70 und 60:40, und zwar bezogen auf das Gewicht.

Es hat sich darüber hinaus als günstig erwiesen, wenn - wiederum bezogen auf das Gewicht - das Verhältnis der Menge an hydraulischem Bindemittel und Asche (zusammen) zur Menge an Kiesschlamm-Trockensubstanz zwischen 7:93 und 60:40, vorzugsweise zwischen 11:89 und 50:50 und insbesondere zwischen 14:86 und 33:67 beträgt.

Sollten mehr als ein hydraulisches Bindemittel und/oder mehr als eine Art von Asche aus Biomasse verwendet werden, so können sich die in diesem Dokument gemachten Mengenangaben alternativ auch auf die Summe der hydraulischen Bindemittel und/oder die Summe der Aschen beziehen.

Nachfolgend werden das hydraulische Bindemittel und die Asche gemeinschaftlich als "Bindemittel" bezeichnet, da die Asche als Ersatz für hydraulisches Bindemittel wirkt. Ausserdem ist jeweils von den bevorzugten Vertretern in Bezug auf das hydraulische Bindemittel und die Asche die Rede, d.h. Zement und Holzasche. Es seien jedoch jeweils neben den bevorzugten Stoffen auch allgemein ein hydraulisches Bindemittel bzw. Asche aus Biomasse offenbart.

Nach dem erfindungsgemässen Verfahren wird entwässerter Kiesschlamm also vorzugsweise mit einem Bindemittel bestehend aus Zement und Holzasche verfestigt, Das Bindemittel enthält dabei mit Vorteil zwischen 20% und 80% Holzasche und wird in Dosierungen von 130 kg bis 400 kg je Tonne Trockengewicht Kiesschlamm eingesetzt. Das Bindemittel wird entweder durch Mischer in den entwässerten Kiesschlamm eingearbeitet und dieses Gemisch anschliessend verbaut, oder es wird direkt vor Ort, z.B. mittels einer Fräse in den partiell entwässerten Kiesschlamm eingearbeitet. Nach dem erfindungsgemässen Verfahren können auch Beton-Fertigteile hergestellt werden.

Kiesschlamm ist vorzugsweise verfahrenstechnisch definiert als die letzte Fraktion aus einer Kieswäsche, d.h. die Fraktion mit den geringsten Korngrössen. Der erfindungsgemäss verwendete Kiesschlamm weist mit Vorteil einen erhöhten Gehalt an Tonmineralien auf. Nach einer alternativen Definition handelt es sich beim Kiesschlamm allgemein um eine Mischung aus Wasser und Gesteinskörnung mit den in diesem Dokument genannten Eigenschaften in Bezug auf Wassergehalt und Korngrösse.

Erfindungsgemäss ist es bevorzugt, wenn die Gesteinskörnung im partiell entwässerten Kiesschlamm (bezogen auf das Trockengewicht des partiell entwässerten Kiesschlammes) zu mindestens 40%, mindestens 60% oder mindestens 80% aus Körnern mit einer Korngrösse von weniger als 150 µm, vorzugsweise weniger als 100 µm und besonders bevorzugt weniger als 63 µm besteht.

Weiterhin ist es vorteilhaft, wenn die Asche (bezogen auf das Gewicht der Asche) zu mindestens 40%, mindestens 60% oder mindestens 80% aus Körnern mit einer Korngrösse von weniger als 300 µm, vorzugsweise weniger als 150 µm und besonders bevorzugt weniger als 50 µm besteht.

Die Korngrössenbestimmung kann beispielsweise mittels Prüfsieben, mittels Laserbeugungsanalyse, oder mittels einer Sedimentationsanalyse erfolgen, wobei die Bestimmung der Korngrösse mittels einer Sedimentationsanalyse bevorzugt ist.

Das hydraulische Bindemittel und die Asche werden mit Vorteil vor der Zugabe zum Kiesschlamm gemischt und bilden zusammen das Bindemittel wie oben beschrieben.

Die Endfestigkeit des erfindungsgemäss verarbeiteten Kiesschlammes hängt auch von der Intensität der Einmischung des Bindemittels in den partiell entwässerten Kiesschlamm ab. Zur Durchmischung können z.B. Durchlaufmischer, Chargenmischer, Knollenbrecher oder Fräsen zum Einsatz kommen. Es ist bevorzugt, wenn der Median der Agglomerate im Gemisch (bezogen auf den maximalen Durchmesser) kleiner als 32 mm und insbesondere kleiner als 16 mm ist. Besonders bevorzugt ist er kleiner als 8 mm und insbesondere kleiner 4 mm. Es kann sich dabei um Agglomerate aus Asche und/oder hydraulischem Bindemittel handeln.

Aus dem genannten Grund ist es von Vorteil wenn der partiell entwässerte Kiesschlamm nach der Zugabe des hydraulischen Bindemittels und der Asche zunächst intensiv vermischt wird.

Weiterhin ist es bevorzugt, den partiell entwässerten Kiesschlamm nach der Zugabe des hydraulischen Bindemittels und der Asche zu mischen, auszubreiten oder aufzuschichten und schliesslich maschinell zu verdichten. Das Ausbreiten bzw. Aufschichten erfolgt dabei gegebenenfalls nach dem Transport. Das Mischen findet mit Vorteil maschinell mittels eines Mischers oder einer Fräse statt während beim Verdichten beispielsweise eine Vibroplatte oder eine Walze zum Einsatz kommen. Das genannte Material kann für Bauwerke wie Hinterfüllungen sowie im Strassen- oder Dammbau verwendet werden.

Ein oben erwähntes Bauwerk, Bauteil oder Element aus einem erfindungsgemässen Gemisch, welches ausgehärtet ist, weist mit Vorteil einen ME-Wert von wenigstens 10 MN/m², vorzugsweise mindestens 20 MN/m² und insbesondere mindestens 30 MN/m² auf.

Es wurde zudem überraschend festgestellt, dass der sehr hohe Chromatgehalt von Asche aus Biomasse, insbesondere von Holzasche, durch den Kiesschlamm stark reduziert wird. Das beschriebene Bauwerk, Bauteil oder Element aus einem erfindungsgemässen Gemisch, welches ausgehärtet ist, weist vorzugsweise einen Chromatgehalt von weniger als 0.8 oder weniger als 0.4 mg/kg, insbesondere weniger als 0.2 mg/kg, gerechnet auf das Gewicht der Trockensubstanz auf.

### Kurze Beschreibung der Zeichnungen

Es zeigen:
- Fig. 1:: eine Graphik mit Angaben zur Festigkeit von Prüfkörpern mit den Rezepturen aus Tabelle 1 (vgl. Ausführungsbeispiel) und
- Fig. 2:: eine Graphik mit Angaben zur Festigkeit von Prüfkörpern in Abhängigkeit von der Korngrösse der Agglomerate.
- Fig. 3:: die Verringerung des Chromatgehaltes von zwei Rezepturen mit je 85% partiell entwässertem Kiesschlamm als Zuschlagstoff. Die eine Rezeptur beinhaltet 7.5% Holzasche und 7.5% Portlandzement und die andere Rezeptur beinhaltet 15% Portlandzement.

### Ausführung der Erfindung

Unsere Versuche zeigten überraschend, dass sich bei der Verfestigung von entwässertem Kiesschlamm bei gleicher Endfestigkeit des Bauwerks die Zementmenge durch Zugabe von Holzasche deutlich reduzieren lässt. Dies im Gegensatz zur Verfestigung von Sand mit den gleichen Bindemittelgemischen.

Dies sei anhand des folgenden Ausführungsbeispiels erläutert:
Die Ausgangsmaterialien waren:
   - Kiesschlamm mit 90% < 63 µm und einem Wassergehalt von 32% ex Kammerfilterpresse
   - Sand 63 µm - 2 mm
   - Holz-Flugasche 80% <0.25mm aus einem Holzheizkraftwerk
   - Portlandzement

**Tabelle 1: Rezepturen**

| **10% Bindemittel** | Sand % | Kiesschlamm % | Holzasche % | Zement % | N/mm2 | |
|---|---|---|---|---|---|---|
| *S1* | *90%* | *0%* | *10%* | *0%* | *0.38* | *nur Holzasche* |
| *S*2 | 90% | 0% | 5% | 5% | 0.93 | |
| S3 | 90% | 0% | 0% | 10% | 4.47 | |
| *K1* | *0%* | *90%* | *10%* | *0%* | *0.20* | *nur Holzasche* |
| K2 | 0% | 90% | 5% | 5% | 0.61 | |
| K3 | 0% | 90% | 0% | 10% | 0.65 | |
| | | | | | | |

| **20% Bindemittel** | Sand % | Kiesschlamm % | Holzasche % | Zement % | N/mm2 | |
|---|---|---|---|---|---|---|
| S4 | 80% | 0% | 15% | 5% | 2.23 | |
| S5 | 80% | 0% | 10% | 10% | 3.01 | |
| S6 | 80% | 0% | 0% | 20% | 16.82 | |
| *K4* | *0%* | *80%* | *20%* | *0%* | *0.36* | *nur Holzasche* |
| K5 | 0% | 80% | 15% | 5% | 0.78 | |
| K6 | 0% | 80% | 10% | 10% | 0.91 | |
| K7 | 0% | 80% | 0% | 20% | 1.33 | |
| | | | | | | |

| **30% Bindemittel** | Sand % | Kiesschlamm % | Holzasche % | Zement % | N/mm2 | |
|---|---|---|---|---|---|---|
| S8 | 70% | 0% | 20% | 10% | 4.49 | |
| S9 | 70% | 0% | 15% | 15% | 8.17 | |
| S10 | 70% | 0% | 0% | 30% | 19.92 | |
| K8 | 0% | 70% | 20% | 10% | 2.38 | |
| K9 | 0% | 70% | 15% | 15% | 2.34 | |
| K10 | 0% | 70% | 0% | 30% | 3.16 | |

Alle Versuche wurden parallel mit Sand und partiell entwässertem Kiesschlamm durchgeführt. Der Zuschlagstoff wurde vorgelegt und mit den in Tabelle 1 aufgelisteten Anteilen an Holzasche, respektive Portlandzement, gemischt. Bei den Versuchen mit Sand wurden 20% Wasser (gerechnet auf das Sandgewicht) zugegeben. Die Versuche wurden in drei Serien durchgeführt, nämlich mit 10%, 20% und 30% Bindemittel (Zement + Holzasche). Mit dem Material wurden Proktor-Prüfkörper hergestellt, diese feucht gelagert und nach 28 Tagen auf ihre Druckfestigkeit untersucht.

Die Festigkeit der nur mit Holzasche verfestigten Prüfkörper war sowohl bei Sand als auch bei Kiesschlamm gering. Holzasche eignet sich also nicht als Bindemittel für Sand oder partiell entwässerten Kiesschlamm, jedenfalls nicht bei den eingesetzten Mengen.

Die Ergebnisse der Versuche mit Zement oder Mischungen aus Zement und Holzasche sind in der Figur 1 dargestellt, in welcher die Festigkeit der Prüfkörper in Abhängigkeit vom Zementgehalt dargestellt ist. Zunächst einmal fällt auf, dass Sand bei gleichen Bindemittelgehalten sehr deutlich höhere Festigkeiten entwickelt, als entwässerter Kiesschlamm. Ebenfalls auffallend ist, dass die Festigkeit der mit Sand hergestellten Prüfkörper praktisch nur vom Zementgehalt abhängt. Alle Messwerte (gestrichelte Kurven) liegen ungefähr im gleichen Trend: Höhere Zementgehalte bringen höhere Festigkeiten und zwar praktisch unabhängig von den ebenfalls im Bindemittel enthaltenen Anteilen an Holzasche.

Völlig unerwartet zeigt sich bei der Verfestigung von Kiesschlamm ein ganz anderes Bild. Hier hängt die Festigkeit zwar vom Bindemittelgehalt ab, jedoch nur eher untergeordnet vom Anteil Zement im Bindemittel. Der Beleg hierfür sind die bei jedem der drei Bindemittelgehalte im Wesentlichen "flach", also unabhängig vom Zementanteil, verlaufenden Festigkeitsentwicklungen.

Zwar haben Zusätze von Holzasche bei der Zementverfestigung von Sand praktisch keinen Effekt auf die Festigkeit, aber es gibt bei der Zementverfestigung von Kiesschlamm offenbar Synergieeffekte zwischen Holzasche und Zement. Während Kiesschlamm mit Holzasche allein praktisch keine Festigkeit entwickelt, ist Zement auch allein zur Verfestigung von Kiesschlamm grundsätzlich geeignet. Jedoch sind die erforderlichen Zementmengen zu teuer zur Herstellung von einem wirtschaftlich erfolgreichen Produkt. Durch die partielle Substitution des Zements durch Holzasche, also mit einem Abfall, der ansonsten kostenpflichtig entsorgt werden müsste, hat die Verfestigung von Kiesschlamm das Potenzial für ein wirtschaftlich gewinnbringendes Verfahren.

Die Endfestigkeit des erfindungsgemäss verarbeiteten Kiesschlammes hängt auch von der Intensität der Einmischung des Bindemittels in den entwässerten Kiesschlamm ab. Um dies näher auszuleuchten, wurden Versuche durchgeführt, in denen die Korngrösse der Agglomerate, die sich beim Einmischen des Bindemittels in den entwässerten Kiesschlamm bildeten, variiert wurde. Vorgelegt wurden die gleichen Ausgangsmaterialien wie in dem oben diskutierten Ausführungsbeispiel. Nach dem Einmischen des Bindemittels wurden die im Labormischer entstandenen ca. 10-20 mm grossen Agglomerate durch ein Sieb gerieben, der Siebdurchschlag kurz homogenisiert, und dann zu Prüfkörkern verarbeitet. Es wurden 20% Bindemittel in zwei verschiedenen Rezepturen verarbeitet und je Rezeptur drei Prüfkörper angelegt. Das für diese Prüfkörper verwendete Material hatte die Maschenweiten 4 mm respektive 8 mm bzw. 16 mm passiert.

In Figur 2 sind die Ergebnisse dargestellt. Es ist deutlich zu sehen, dass das Material, welches in Agglomerate <4mm zerrieben worden war bei gleicher Bindemittelmenge und -zusammensetzung zu deutlich höheren Festigkeiten der Prüfkörper führte, als die gröberen Agglomerate. Um eine gute Festigkeit zu erreichen, ist es also erforderlich, das Bindemittel möglichst intensiv einzumischen und grössere Agglomerate zu zerkleinern. Bei Einsatz von insgesamt 20% Bindemittel liess sich der darin enthaltene Zementanteil durch Holzasche von 50% auf 25% im Bindemittel reduzieren ohne dass eine deutliche Festigkeitseinbusse beobachtet wurde.

Ein besonderer Vorteil des erfindungsgemässen Bindemittels liegt darin, dass der sehr hohe Chromatgehalt der Holzasche durch den Kiesschlamm stark reduziert wird. Holzasche enthält typischerweise zwischen 10 und 20 mg/kg Chromat, welches sehr umweltschädlich ist. Wie in FIG 3 gezeigt, verringert sich der Chromatgehalt im Baustoff innerhalb von einer Woche nach dem Einbau drastisch. Nach etwa einem Monat liegt der Chromatgehalt im Bauwerk etwa auf dem Niveau, welches bei der Verwendung konventioneller Rezepturen mit reinem Portlandzement erreicht wird. Dieser Effekt wird nicht beobachtet, wenn "inerte" Zuschlagstoffe wie Kies und Sand eingesetzt werden. Der vermutete Grund für diese besondere Eigenschaft des Kiesschlammes ist, dass dieser - im Gegensatz zu Kies und Sand - Anteile an organischer Substanz enthält. Ohne sich an eine Theorie binden zu wollen, wird angenommen, dass durch die organische Substanz das starke Oxidationsmittel Chromat zum relativ ungefährlichen Chrom(III) chemisch reduziert wird. Hinzu kommt, dass im Kiesschlamm Tonmineralien vorliegen, welche in der Lage sind, Chromat zu adsorbieren. Diese Tonmineralien fehlen in "inerten" Zuschlagstoffen wie Kies, Sand oder Gesteinsmehl.

## Patentansprüche

1. Aushärtbares Gemisch, insbesondere eine Stampfmasse, beinhaltend
a) partiell entwässerten Kiesschlamm, wobei
- der partiell entwässerte Kiesschlamm Gesteinskörnung und Wasser enthält,
- bezogen auf das Trockengewicht des Kiesschlamms die Gesteinskörnung zu mindestens 40 Prozent aus Körnern mit einer Korngrösse von weniger als 150 Mikrometern besteht,
- der partiell entwässerte Kiesschlamm einen Wassergehalt von 15 bis 50 Prozent aufweist,
- der Anteil an Kiesschlamm-Trockensubstanz am Gemisch mindestens 40 Gew.-% beträgt, und
b) ein hydraulisches Bindemittel,
**dadurch gekennzeichnet, dass**
c) das Gemisch zusätzlich Asche von Biomasse beinhaltet.

2. Aushärtbares Gemisch nach Anspruch 1, **dadurch gekennzeichnet, dass** der Anteil an Kiesschlamm-Trockensubstanz am Gemisch mindestens 46 Gew.-% und bevorzugt mindestens 53 Gew.-% beträgt.

3. Aushärtbares Gemisch nach einem der Ansprüche 1 oder 2, **dadurch gekennzeichnet,**
- **dass** es sich bei der Asche um Asche von pflanzlicher Biomasse handelt, wobei der Anteil der Asche mit einer Korngrösse kleiner als 0,3 mm weniger als 15 Gew.-%, vorzugsweise weniger als 10 Gew.-% und insbesondere weniger als 6 Gew.-% Silizium enthält, und/oder
- **dass** es sich bei der Asche um Holzasche, vorzugsweise Holz-Flugasche, handelt und
- **dass** es sich beim hydraulischen Bindemittel vorzugsweise um Zement handelt.

4. Aushärtbares Gemisch nach einem der Ansprüche 1 bis 3, **dadurch gekennzeichnet, dass** bezogen auf das Gewicht das Verhältnis:
- der Menge an hydraulischem Bindemittel
- zur Menge an Asche
zwischen 15:85 und 85:15, vorzugsweise zwischen 20:80 und 70:30 und insbesondere zwischen 30:70 und 60:40 beträgt.

5. Aushärtbares Gemisch nach einem der Ansprüche 1 bis 4, **dadurch gekennzeichnet, dass** bezogen auf das Gewicht das Verhältnis:
- der Menge an hydraulischem Bindemittel und Asche
- zur Menge an Kiesschlamm-Trockensubstanz
zwischen 7:93 und 60:40, vorzugsweise zwischen 11:89 und 50:50 und insbesondere zwischen 14:86 und 33:67 beträgt.

6. Aushärtbares Gemisch nach einem der Ansprüche 1 bis 5, **dadurch gekennzeichnet, dass** die Gesteinskörnung im partiell entwässerten Kiesschlamm bezogen auf das Kiesschlamm-Trockengewicht zu mindestens 40%, vorzugsweise mindestens 60% und insbesondere mindestens 80% aus Körnern mit einer Korngrösse von weniger als 100 µm und besonders bevorzugt weniger als 63 µm besteht.

7. Aushärtbares Gemisch nach einem der Ansprüche 1 bis 6, **dadurch gekennzeichnet, dass** der Wassergehalt des partiell entwässerten Kiesschlamms 20 bis 40% und insbesondere 25 bis 35% beträgt.

8. Aushärtbares Gemisch nach einem der Ansprüche 1 bis 7, **dadurch gekennzeichnet, dass** bezogen auf die Grösse der Median der Agglomerate im Gemisch kleiner als 16 mm, insbesondere kleiner als 8 mm und besonders bevorzugt kleiner als 4 mm ist.

9. Verfahren zur Herstellung eines aushärtbaren Gemischs, insbesondere einer Stampfmasse, **dadurch gekennzeichnet, dass** einem partiell entwässerten Kiesschlamm ein hydraulisches Bindemittel zugegeben wird, wobei
- der partiell entwässerte Kiesschlamm Gesteinskörnung und Wasser enthält,
- bezogen auf das Trockengewicht des Kiesschlamms die Gesteinskörnung zu mindestens 40 Prozent aus Körnern mit einer Korngrösse von weniger als 150 Mikrometern besteht, und
- der partiell entwässerte Kiesschlamm einen Wassergehalt von 15 bis 50 Prozent aufweist, **dadurch gekennzeichnet, dass**
- dem partiell entwässerten Kiesschlamm zusätzlich Asche von Biomasse zugegeben wird und
- der Anteil an Kiesschlamm-Trockensubstanz am Gemisch mindestens 40 Gew.-% beträgt.

10. Verfahren nach Anspruch 9, **dadurch gekennzeichnet, dass** bei der Herstellung des aushärtbaren Gemischs die Eigenschaften und Mengenangaben gemäss einem oder mehreren der Ansprüche 2 bis 7 eingehalten werden.

11. Verfahren nach einem der Ansprüche 9 oder 10, **dadurch gekennzeichnet, dass** der partiell entwässerte Kiesschlamm nach der Zugabe des hydraulischen Bindemittels und der Asche zunächst vermischt wird, bis bezogen auf die Grösse der Median der Agglomerate im Gemisch kleiner als 16 mm, insbesondere kleiner als 8 mm und besonders bevorzugt kleiner als 4 mm ist.

12. Verfahren nach Anspruch 11, **dadurch gekennzeichnet, dass** der partiell entwässerte Kiesschlamm nach der Zugabe des hydraulischen Bindemittels und der Asche und der Vermischung ausgebreitet und maschinell verdichtet wird.

13. Bauwerk, Bauteil oder Element aus einem Gemisch gemäss einem der Ansprüche 1 bis 8, welches ausgehärtet ist und vorzugsweise einen Chromatgehalt von weniger als 0.4 mg/kg, insbesondere weniger als 0.2 mg/kg, gerechnet auf das Gewicht der Trockensubstanz, aufweist.

14. Bauwerk nach Anspruch 13, **dadurch gekennzeichnet, dass** dieses einen ME-Wert von wenigstens 10 MN/m², vorzugsweise mindestens 20 MN/m² und insbesondere mindestens 30 MN/m² aufweist.

## Claims

1. Curable mixture, in particular tamping clay, containing:
a) partially dehydrated gravel sludge, whereby
- the partially dehydrated gravel sludge contains aggregate and water,
- based on the dry weight of the gravel sludge the aggregate consists of at least 40 per-cent of grains with a grain size of less than 150 micrometers,
- the partially dehydrated gravel sludge has a water content of 15 to 50 per-cent,
- the proportion of gravel sludge dry substance of the mixture is at least 40% by weight and
b) a hydraulic binder,
**characterized in that**
c) the mixture additionally contains ash from biomass.

2. Curable mixture according to claim 1, **characterized in that** the proportion of gravel sludge dry substance of the mixture is at least 46% by weight and preferably at least 53% by weight.

3. Curable mixture according to one of the claims 1 or 2, **characterized in that**
- the matter is, for the ash, of vegetal biomass ash, whereby the proportion of the ash with a grain size less than 0,3 mm contains less than 15% by weight, preferably less than 10% by weight and in particular less than 6% by weight of silicium and/or
- the matter is, for the ash, of wood fly ash and
- that the matter is, for the hydraulic binder, preferably of cement.

4. Curable mixture according to one of the claims 1 to 3, **characterized in that**, based on the weight, the ratio
- of the quantity of hydraulic binder
- to the quantity of ash
is between 15:85 and 85:15, preferably between 20:80 and 70:30 and in particular between 30:70 and 60:40.

5. Curable mixture according to one of the claims 1 to 3, **characterized in that**, based on the weight, the ratio
- of the quantity of hydraulic binder and ash
- to the quantity of gravel sludge dry substance
is between 7:93 and 60:40, preferably between 11:89 and 50:50 and in particular between 14:86 and 33:67.

6. Curable mixture according to one of the claims 1 to 5, **characterized in that**, based on the gravel sludge dry weight, the aggregate in the partially dehydrated gravel sludge consists of at least 40%, preferably of at least 60% and in particular of at least 80% grains with a grain size of less than 100 µm and particularly preferably of less than 63 µm.

7. Curable mixture according to one of the claims 1 to 6, **characterized in that** the water content of the partially dehydrated gravel sludge is 20 to 40% and in particular 25 to 35%.

8. Curable mixture according to one of the claims 1 to 7, **characterized in that**, based on the size, the median of the agglomerates in the mixture is less than 16 mm, in particular less than 8 mm and particularly preferably less than 4 mm.

9. Method for producing a curable mixture, in particular tamping clay, **characterized in that** a hydraulic binder is added to a partially dehydrated gravel sludge, whereby
- the partially dehydrated gravel sludge contains aggregate and water,
- based on the dry weight of the gravel sludge the aggregate consists of at least 40 per-cent of grains with a grain size of less than 150 micrometers and
- the partially dehydrated gravel sludge has a water content of 15 to 50 per-cent, **characterized in that**
- ash from biomass is additionally added to the partially dehydrated gravel sludge and
- the proportion of gravel sludge dry substance of the mixture is at least 40% by weight.

10. Method according to claim 9, **characterized in that** for the production of the curable mixture the properties and the indications of quantities according to one or several claims 2 to 7 are complied with.

11. Method according to one of the claims 9 or 10, **characterized in that** the partially dehydrated gravel sludge is first blended after addition of the hydraulic binder and of the ash until the size of the median of the agglomerates in the mixture is less than 16 mm, in particular less than 8 mm and particularly preferably less than 4 mm.

12. Method according to claim 11, **characterized in that** the partially dehydrated gravel sludge is spread and mechanically compacted after addition of the hydraulic binder and of the ash and after blending.

13. Construction, component or element made of a mixture according to one of the claims 1 to 8 that is cured and that preferably has a chromate content of less than 0.4 mg/kg, in particular of less than 0.2 mg/kg, calculated on the weight of the dry substance.

14. Construction according to claim 13, **characterized in that** it has a ME value of at least 10 MN/m², preferably of at least 20 MN/m² and in particular of at least 30 MN/m².

## Revendications

1. Mélange durcissable, en particulier pisé réfractaire, contenant :
a) de la boue de gravier partiellement déshydratée, cependant que
- la boue de gravier partiellement déshydratée contient une granularité de roche et de l'eau,
- le granulat est constitué par au moins 40 pour-cent de grains d'une grosseur de grain de moins de 150 micromètres par rapport au poids à l'état sec de la boue de gravier,
- la boue de gravier partiellement déshydratée présente une teneur en eau de 15 à 50 pour-cent,
- la proportion de substance sèche de boue de gravier du mélange est d'au moins 40 pour-cent et
b) un liant hydraulique,
**caractérisé en ce que**
c) le mélange contient en plus des cendres de biomasse.

2. Mélange durcissable selon la revendication 1, **caractérisé en ce que** la proportion de substance sèche de boue du mélange est d'au moins 46 pour-cent et de préférence d'au moins 53 pour-cent.

3. Mélange durcissable selon l'une des revendications 1 ou 2, **caractérisé en ce**
- **qu'**il s'agit pour les cendres de cendres de biomasse végétale, cependant que la proportion de cendres avec une grosseur de grain de moins de 0,3 mm contient moins de 15 pour-cent en poids, de préférence moins de 10 pour-cent en poids et en particulier moins de 6 pour-cent en poids de silicium et/ou
- **qu'**il s'agit, pour les cendres de cendres de bois, de préférence de cendres volantes et
- **qu'**il s'agit, pour le liant hydraulique, de préférence de ciment.

4. Mélange durcissable selon l'une des revendications 1 à 3, **caractérisé en ce que** le rapport par rapport au poids
- de la quantité de liant hydraulique
- par rapport aux cendres
est entre 15:85 et 85:15, de préférence entre 20:80 et 70:30 et en particulier entre 30:70 et 60:40.

5. Mélange durcissable selon l'une des revendications 1 à 4, **caractérisé en ce que** le rapport par rapport au poids
- de la quantité de liant hydraulique et de centres
- par rapport à la quantité de substance sèche de boue de gravier est entre 7:93 et 60:40, de préférence entre 11:89 et 50:50 et en particulier entre 14:86 et 33:67.

6. Mélange durcissable selon l'une des revendications 1 à 5, **caractérisé en ce que** le granulat dans la boue de gravier partiellement déshydratée par rapport au poids è l'état sec de la boue de gravier est constituée pour au moins 40%, de préférence au moins 60% et en particulier au moins 80% de grains avec une grosseur de grain de moins de 100 µm et de manière particulièrement préférée de moins de 63 µm.

7. Mélange durcissable selon l'une des revendications 1 à 6, **caractérisé en ce que** la teneur en eau de la boue de gravier partiellement déshydratée est de 20 à 40% et en particulier de 25 à 35%.

8. Mélange durcissable selon l'une des revendications 1 à 6, **caractérisé en ce que** par rapport à la grandeur la médiane des agglomérats du mélange est inférieure à 16 mm, en particulier inférieure à 8 mm et de manière particulièrement préférée inférieure à 4 mm.

9. Procédé pour la production d'un mélange durcissable, en particulier d'un pisé réfractaire, **caractérisé en ce qu'**un liant hydraulique est ajouté à une boue de gravier partiellement déshydratée, cependant que
- la boue de gravier partiellement déshydratée contient une granularité de roche et de l'eau,
- le granulat est constitué par au moins 40 pour-cent de grains d'une grosseur de grain de moins de 150 micromètres par rapport au poids à l'état sec de la boue de gravier et
- la boue de gravier partiellement déshydratée présente une teneur en eau de 15 à 50 pour-cent, **caractérisé en ce que**
- des cendres de biomasse sont ajoutées en plus à la boue de gravier partiellement déshydratée et
- la proportion de substance sèche de boue de gravier du mélange est d'au moins 40 pour-cent.

10. Procédé selon la revendication 9, **caractérisé en ce que** les propriétés et les indications de quantités selon l'une ou plusieurs des revendications 2 à 7 sont respectées lors de la production du mélange durcissable.

11. Procédé selon l'une des revendications 9 ou 10, **caractérisé en ce que** la boue de gravier partiellement déshydratée est tout d'abord mélangée après addition du liant hydraulique et des cendres jusqu'à ce que par rapport à la grandeur la médiane des agglomérats du mélange est inférieure à 16 mm, en particulier inférieure à 8 mm et de manière particulièrement préférée inférieure à 4 mm.

12. Procédé selon la revendication 11, **caractérisé en ce que** la boue de gravier partiellement déshydratée est tout d'abord répandue et compactée mécaniquement après addition du liant hydraulique et des cendres et après mélange.

13. Construction, composant ou élément à partir d'un mélange selon l'une des revendications 1 à 8 qui est durci et qui a de préférence une teneur en chromate de moins de 0,4 mg/kg, en particulier de moins de 0,2 mg/kg, calculée sur le poids de la substance sèche.

14. Construction selon la revendication 13, **caractérisée en ce qu'**elle présente une valeur ME de moins de 10 MN/m², de préférence de moins de 20 MN/m² et en particulier de moins de 30 MN/m².
